# EUROPÄISCHE PATENTSCHRIFT

(11) **EP 3 898 128 B1**
(45) Veröffentlichungstag und Bekanntmachung des Hinweises auf die Patenterteilung: **06.05.2026**
(21) Anmeldenummer: 19835382.3
(22) Anmeldetag: 19.12.2019
(51) Int. Cl.: B25J 9/00, F16B 2/12, F16B 2/06

(54) **ROBOTERHALTERUNG ZUM LAGERN EINES ROBOTERMANIPULATORS AUF EINER TISCHPLATTE**
ROBOT FIXTURE FOR MOUNTING A ROBOT MANIPULATOR ON A TABLETOP
SUPPORT DE ROBOT POUR LE MONTAGE D'UN MANIPULATEUR DE ROBOT SUR UN PLATEAU DE TABLE

(30) Priorität: 21.12.2018 DE 102018133417
(43) Veröffentlichungstag der Anmeldung: 27.10.2021
(73) Patentinhaber: FR Administration GmbH, 81369 München (DE)
(72) Erfinder: ENDE, Tobias, 81247 München (DE); KULZER, Martin, 81379 München (DE)
(74) Vertreter: Cohausz & Florack
(86) Internationale Anmeldenummer: PCT/EP2019/086266
(87) Internationale Veröffentlichungsnummer: WO 2020/127700

(56) Entgegenhaltungen:
- EP-A1- 2 145 586
- DE-A1- 102012 110 193
- DE-B3- 102015 120 058
- JP-A- 2013 166 197
- US-A- 3 638 973
- US-A1- 2009 146 033

## Beschreibung

Die Erfindung betrifft eine Roboterhalterung zum Fixieren eines Robotermanipulators an einer Tischplatte sowie ein Verfahren zum Lagern eines Robotermanipulators auf einer Tischplatte mittels einer ebensolchen Roboterhalterung.

Im Stand der Technik sind diverse Aufstellvorrichtungen für Robotermanipulatoren bekannt.

Die DE 10 2015 120 058 B3 betrifft hierzu eine Ankoppeleinrichtung, die zum Ankoppeln einer mobilen Prozesseinrichtung mit einem programmierbaren Industrieroboter und einer Transportvorrichtung an einem Arbeitsplatz einer Prozessstation vorgesehen und ausgebildet ist, wobei die Ankoppeleinrichtung eine Klemmeinrichtung mit einer Klemmbacke und einem Spannmittel aufweist, wobei die Klemmeinrichtung zur Bildung einer die Prozesseinrichtung am Arbeitsplatz fixierenden Klemmverbindung zwischen der Klemmbacke und einer Klemmleiste an dem Arbeitsplatz vorgesehen und ausgebildet ist, wobei die Klemmeinrichtung eine einzelne obere oder untere Klemmbacke aufweist, die vom Spannmittel gegen die Oberseite oder Unterseite der Klemmleiste gedrückt wird oder die Klemmeinrichtung mehrere obere und untere Klemmbacken aufweist, die vom Spannmittel gegen die Oberseite und Unterseite der Klemmleiste gedrückt werden, wobei die Klemmbacke mit Abstand über dem Untergrund im Bereich einer Tischplatte am Arbeitsplatz angeordnet ist/sind.

Die EP 2 145 586 A1 betrifft außerdem einen Adapter zur Fixierung eines Medizingerätes an einer oder zwei Supportstrukturen, wobei der Adapter dreiteilig aus einem Trageteil und zwei Supportteilen aufgebaut ist, wobei das Trageteil mit dem Medizingerät verbindbar ist, das erste Supportteil mit einer ersten Supportstruktur verbindbar ist und das zweite Supportteil mit einer zweiten Supportstruktur verbindbar ist, und der Adapter zumindest drei Zustände einnehmen kann, wobei im ersten Zustand das Trageteil spielfrei nur mit dem ersten Supportteil verbunden ist, im zweiten Zustand das Trageteil spielfrei nur mit dem zweiten Supportteil verbunden ist und im dritten Zustand das Trageteil spielfrei mit dem ersten Supportteil und dem zweiten Supportteil verbunden ist.

Die DE 10 2012 110 193 A1 betrifft ferner eine Haltevorrichtung zum lösbaren Befestigen eines Roboter, mit einem Roboteranschluss für den Roboter, wobei die Haltevorrichtung ferner einen Schnellspannmechanismus zum Befestigen der Haltevorrichtung an einer Schiene umfasst.

Aufgabe der Erfindung ist es, das Lagern eines Robotermanipulators an einer Tischplatte schonender für die Tischplatte und einfacher zu gestalten.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Roboterhalterung zum Fixieren eines Robotermanipulators an einer Tischplatte, aufweisend eine Basislagereinheit mit einer Robotermanipulatorschnittstelle zum Fixieren des Robotermanipulators auf der Basislagereinheit, wobei die Basislagereinheit zum flächigen Einleiten einer Gewichtskraft des Robotermanipulators in eine Oberseite der Tischplatte dient, wobei an einem stirnseitigen Ende der Basislagereinheit ein erstes Ende eines Spannarms angeordnet ist und der Spannarm einen von der Basislagereinheit wegführenden Armabschnitt und einen zur Basislagereinheit parallel verlaufenden Armabschnitt aufweist, sodass beim Lagern der Basislagereinheit auf der Tischplatte der parallel zur Basislagereinheit verlaufende Armabschnitt unterhalb der Tischplatte verläuft, und wobei an einem zweiten Ende des Spannarms ein gegenüber dem Spannarm in Richtung der Basislagereinheit bewegbarer Spannschieber angeordnet ist, und an einem der Basislagereinheit zugewandtem Ende des Spannschiebers ein Auflagekissen am Spannschieber angeordnet ist, wobei das Auflagekissen um zumindest eine Achse momentenfrei gegenüber dem Spannschieber gelagert ist und wobei das Auflagekissen zum Andrücken der Roboterhalterung gegen eine Unterseite der Tischplatte dient.

Die Basislagereinheit ist bevorzugt plattenförmig ausgebildet, insbesondere als Multiplex-Holzplatte, Metallplatte, oder als Kunststoffplatte. Das stirnseitige Ende der Holzplatte ist insbesondere jenes, das im Bereich der Tischkante der Tischplatte im montierten Zustand der Roboterhalterung angeordnet ist. Dieses stirnseitige Ende ist ferner insbesondere eine Kante der Basislagereinheit, wobei die Kante insbesondere senkrecht zu der Oberseite und Unterseite der Basislagereinheit ist und verglichen mit den Flächen der Oberseite und Unterseite der Basislagereinheit eine relativ kleine Fläche aufweist.

Der von der Basislagereinheit wegführende Armabschnitt des Spannarms dient daher insbesondere in erster Linie dazu, den zur Basislagereinheit parallel verlaufenden Armabschnitt des Spannarms von der Basislagereinheit zu beabstanden, sodass eine Tischplatte zwischen der Basislagereinheit und dem zur Basislagereinheit parallel verlaufenden Armabschnitt des Spannarms einführbar ist.

Der von der Basislagereinheit wegführende Armabschnitt weist bevorzugt eine zu der Oberseite und/oder Unterseite der Basislagereinheit rechtwinklig verlaufende Sektion auf, während der zur Basislagereinheit parallel verlaufende Armabschnitt bevorzugt sich durchgehend unterhalb der Unterseite der Basislagereinheit erstreckt. Bevorzugt sind eine Länge des parallel verlaufenden Armabschnitts und eine Länge der Basislagereinheit entlang ihrer Oberseite (wahlweise Unterseite) gleich groß.

Ferner ist es auch möglich, dass der von der Basislagereinheit wegführende Armabschnitt und der zur Basislagereinheit parallel verlaufende Armabschnitt des Spannarms beliebige Formen in der so definierten jeweiligen Erstreckungsrichtung des Spannarms aufweisen - so kann der Spannarm insbesondere winklig, kreisbogenförmig oder elliptisch ausgebildet sein.

Vorteilhaft ist der Spannschieber derart relativ zur Basislagereinheit angeordnet und bewegbar, dass beim Bewegen des Spannschiebers auf die Basislagereinheit zu, ohne dass eine Tischplatte sich zwischen dem Auflagekissen und der Basislagereinheit sich befindet, das Auflagekissen auch gegen die Basislagereinheit gedrückt wird. Ist dagegen die Roboterhalterung bereits derart an der Tischplatte angeordnet, dass sich die Basislagereinheit auf der Oberseite der Tischplatte befindet, stößt letztendlich beim Bewegen des Spannschiebers auf die Basislagereinheit zu der Spannschieber gegen die Unterseite der Tischplatte.

Das Auflagekissen ist bevorzugt halbkugelförmig oder scheibenförmig ausgebildet.

Es ist eine vorteilhafte Wirkung der Erfindung, dass mittels des um zumindest eine Achse momentenfrei gegenüber dem Spannschieber gelagerten Auflagekissens die Orientierung des Auflagekissens beim Andrücken des Auflagekissens gegen eine Unterseite der Tischplatte von selbst sich der Oberfläche der Unterseite der Tischplatte zur optimalen Druckverteilung anpasst. Ferner erlaubt die Roboterhalterung eine schnelle und einfache Lagerung eines Robotermanipulators auf einer Tischplatte.

Gemäß einer vorteilhaften Ausführungsform sind an der Basislagereinheit genau zwei Spannarme angeordnet.

Nach dieser Ausführungsform sind an dem stirnseitigen Ende der Basislagereinheit das erste Ende eines ersten Spannarms und das erste Ende eines zweiten Spannarms angeordnet. Demnach sind bevorzugt genau zwei bevorzugt baugleiche Spannarme an dem stirnseitigen Ende der Basislagereinheit angeordnet. Vorteilhaft verhindert oder verlangsamt dies ein selbstständiges Lösen des jeweiligen Auflagekissens, insbesondere dann, wenn der Spannschieber eine Gewindespindel ist, mittels der das jeweilige Auflagekissen durch Andrehen der Gewindespindel gegen die Unterseite der Tischplatte angedrückt wird.

Gemäß einer weiteren vorteilhaften Ausführungsform ist der Spannschieber eine Gewindespindel, wobei die Gewindespindel durch ein im Spannarm angeordnetes Innengewinde geführt ist. Die Gewindespindel ist insbesondere ein Stab mit einem Außengewinde, wobei das Außengewinde im Innengewinde des Spannarms geführt wird, sodass ein Andrehen der Gewindespindel eine translatorische Verschiebung der Gewindespindel in ihrer Achsrichtung auf die Basislagereinheit zu oder von der Basislagereinheit weg bewirkt - je nach Drehrichtung der Gewindespindel.

Gemäß einer weiteren vorteilhaften Ausführungsform weist die Gewindespindel an der von dem Auflagekissen weg gewandten Seite eine Werkzeugschnittstelle zum Ansetzen eines Werkzeugs zum Drehen der Gewindespindel auf.

Vorteilhaft weist das Werkzeug einen Drehmomentadapter zum Einstellen eines maximal zulässigen Anzugsmoments der Gewindespindel auf. Dies ermöglicht vorteilhaft eine ausreichend feste aber nicht die Tischplatte beschädigende Kraft des Auflagekissens gegen die Tischplatte.

Gemäß einer weiteren vorteilhaften Ausführungsform weist die Werkzeugschnittstelle ein Innensechskant-Profil auf.

Gemäß einer weiteren vorteilhaften Ausführungsform ist an der Gewindespindel eine Mutter angeordnet.

Bevorzugt ist die Mutter eine selbstsichernde Mutter. Vorteilhaft wird ein selbstständiges Lösen des jeweiligen Auflagekissens von der Unterseite der Tischplatte durch selbstständiges Aufdrehen der Gewindespindel verhindert.

Gemäß einer weiteren vorteilhaften Ausführungsform sind das Auflagekissen und der Spannschieber über ein Kugelgelenk verbunden.

Das Kugelgelenk erlaubt vorteilhaft eine momentenfreie Lagerung um zwei aufeinander senkrecht stehende Achsen, wobei diese Achsen selbst wiederum jeweils senkrecht zur Verschieberichtung des Spannschiebers liegen. Vorteilhaft passt sich hierdurch das Auflagekissen in seiner Orientierung beim Andrücken gegen die Unterseite der Tischplatte der Oberfläche der Unterseite der Tischplatte an.

Erfindungsgemäß ist der Spannschieber gegenüber dem Spannarm verdrehbar gelagert.

Vorteilhaft erlaubt ein gegenüber dem Spannarm verdrehbarer Spannschieber das einfache Anordnen der Roboterhalterung auch an einem Tisch mit tief abstehender Tischkante. Durch Verdrehen des Spannschiebers, so dass das Auflagekissen einen weitaus größeren Abstand von der Basislagereinheit einnimmt, kann der Spannarm an der Tischkante vorbei geführt werden. Nach dem Vorbeiführen kann anschließend der Spannschieber in seine normale Position zurück verdreht werden, um den Spannschieber zum Andrücken des Auflagekissens gegen die Basislagereinheit zu bewegen.

Bevorzugt ist der Spannschieber gegenüber dem Spannarm um 90° verdrehbar.

Bevorzugt ist der Spannschieber vom Spannarm weg, insbesondere vom von der Basislagereinheit wegführenden Armabschnitt des Spannarms weg, gerichtet verdrehbar.

Erfindungsgemäß ist der Spannschieber über Rasterpositionen verdrehbar.

Vorteilhaft erlauben die Rasterpositionen ein Zurück-Verdrehen des Spannschiebers in eine zur Basislagereinheit rechtwinklig stehende Orientierung.

Gemäß einer weiteren vorteilhaften Ausführungsform weist das Auflagekissen an seiner der Unterseite der Tischplatte zugewandten Oberfläche Elastomerkunststoff auf.

Der Elastomerkunststoff erhöht vorteilhaft die Haftreibung zwischen dem Auflagekissen und der Unterseite der Tischplatte.

Ein weiterer Aspekt der Erfindung betrifft ein Verfahren zum Lagern eines Robotermanipulators auf einer Tischplatte mittels einer Roboterhalterung, wobei die Roboterhalterung eine Basislagereinheit mit einer Robotermanipulatorschnittstelle aufweist und wobei die Basislagereinheit zum flächigen Einleiten der Gewichtskraft des Robotermanipulators in eine Oberseite der Tischplatte dient, wobei an einem stirnseitigen Ende der Basislagereinheit ein erstes Ende eines Spannarms angeordnet ist und der Spannarm einen von der Basislagereinheit wegführenden Armabschnitt und einen zur Basislagereinheit parallel verlaufenden Armabschnitt aufweist, und wobei an einem zweiten Ende des Spannarms ein gegenüber dem Spannarm in Richtung der Basislagereinheit bewegbarer Spannschieber angeordnet ist und an einem der Basislagereinheit zugewandten Ende des Spannschiebers ein Auflagekissen um zumindest eine Achse momentenfrei am Spannschieber angeordnet ist, aufweisend die Schritte:
- Anordnen der Basislagereinheit auf der Oberseite der Tischplatte bei gleichzeitigem Führen des zur Basislagereinheit parallel verlaufenden Armabschnitts unter die Tischplatte,
- Verschieben des Spannschiebers in Richtung der Basislagereinheit zum Andrücken des Auflagekissens gegen eine Unterseite der Tischplatte, und
- Fixieren des Robotermanipulators an der Robotermanipulatorschnittstelle der Basislagereinheit.

Gemäß einer vorteilhaften Ausführungsform des Verfahrens - wobei der Spannschieber eine Gewindespindel ist und die Gewindespindel durch ein im Spannarm angeordnetes Innengewinde geführt ist, und wobei die Gewindespindel an der von dem Auflagekissen weg gewandten Seite eine Werkzeugschnittstelle zum Ansetzen eines Werkzeugs zum Drehen der Gewindespindel aufweist - erfolgt das Verschieben des Spannschiebers in Richtung der Basislagereinheit zum Andrücken des Auflagekissens gegen die Unterseite der Tischplatte mittels eines Drehmomentschlüssels bis zu einem vorgegebenen Maximaldrehmoment.

Vorteile und bevorzugte Weiterbildungen des vorgeschlagenen Verfahrens ergeben sich durch eine analoge und sinngemäße Übertragung der im Zusammenhang mit der vorgeschlagenen Vorrichtung vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine Roboterhalterung zum Fixieren eines Robotermanipulators an einer Tischplatte gemäß einem Ausführungsbeispiel der Erfindung, und
- Fig. 2: ein Verfahren zum Lagern eines Robotermanipulators auf einer Tischplatte mittels einer Roboterhalterung gemäß einem weiteren Ausführungsbeispiel der Erfindung.

Die Darstellungen in den Figuren sind schematisch und nicht maßstäblich.

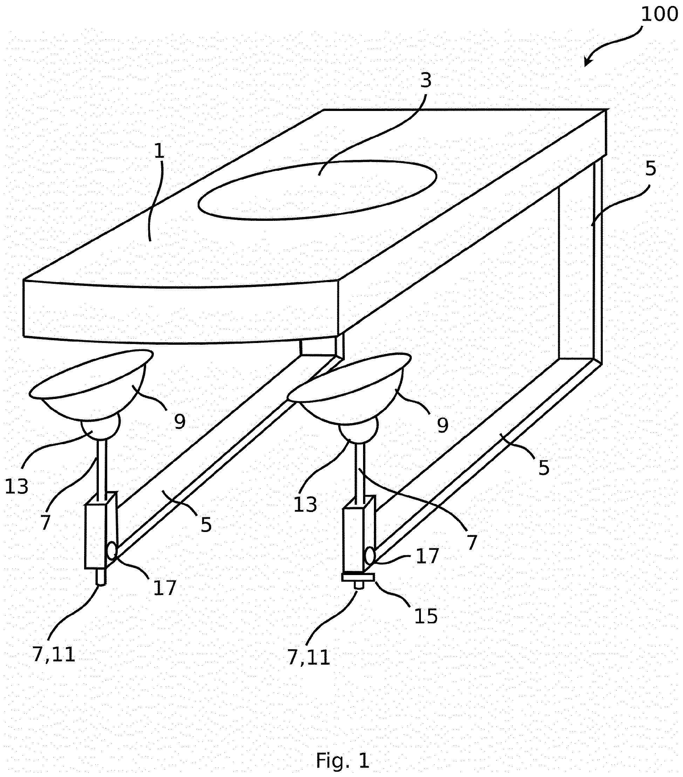

Fig. 1 zeigt eine Roboterhalterung 100 zum Fixieren eines Robotermanipulators an einer Tischplatte. Die Roboterhalterung 100 weist eine aus einer Holzplatte gefertigte Basislagereinheit 1 mit einer Robotermanipulatorschnittstelle 3 auf. Die Robotermanipulatorschnittstelle 3 weist entsprechende Verschraubungselemente zum Fixieren des Robotermanipulators auf der Basislagereinheit 1 auf. Grundsätzlich dient die Basislagereinheit 1 zum flächigen Einleiten einer Gewichtskraft des Robotermanipulators in eine Oberseite der Tischplatte, auf der der Robotermanipulator angeordnet werden soll. An einem stirnseitigen Ende der Basislagereinheit 1 - in Fig. 1 die nicht sichtbare Hinterkante der plattigen Basislagereinheit 1 - ist ein jeweiliges erstes Ende von zwei Spannarmen 5 angeordnet. Die Spannarme 5 sind voneinander beabstandet und jeweils unterhalb und entlang einer sich an das stirnseitige Ende der Basislagereinheit 1 anschließenden Seitenfläche angeordnet. Der jeweilige Spannarm 5 weist einen von der Basislagereinheit 1 wegführenden Armabschnitt und einen sich nach einem Knick im rechten Winkel dazu anschließenden jeweils zur Basislagereinheit 1 parallel verlaufenden Armabschnitt auf, sodass beim Lagern der Basislagereinheit 1 auf der Tischplatte der parallel zur Basislagereinheit 1 verlaufende Armabschnitt unterhalb der Tischplatte verläuft. An einem zweiten Ende des jeweiligen Spannarms 5 ist ein jeweiliger gegenüber dem jeweiligen Spannarm 5 in Richtung der Basislagereinheit 1 bewegbarer Spannschieber 7 angeordnet. Der jeweilige Spannschieber 7 des jeweiligen Spannarms 5 ist als Gewindespindel ausgeführt, die durch Verdrehen gegenüber dem jeweiligen Spannarm 5, in dem ein dazu passendes Innengewinde angeordnet ist, in Richtung Basislagereinheit 1 oder von dieser weg - je nach Drehrichtung - translatorisch bewegt wird. An einem der Basislagereinheit 1 zugewandtem Ende des jeweiligen Spannschiebers 7 ist ein Auflagekissen 9 am Spannschieber 7 angeordnet. Dieses jeweilige Auflagekissen 9 ist durch ein Kugelgelenk 13 in einem vorgegebenen Winkelbereich momentenfrei gegenüber dem jeweiligen Spannschieber 7 gelagert, wobei das Auflagekissen 9 zum Andrücken der Roboterhalterung 100 gegen eine Unterseite der Tischplatte dient. Die jeweilige Gewindespindel 7 weist an der von dem Auflagekissen 9 weg gewandten Seite eine Werkzeugschnittstelle 11 zum Ansetzen eines Werkzeugs zum Drehen der Gewindespindel auf. Diese Werkzeugschnittstelle 11 ist mit einem Innensechskant-Profil ausgestattet, um das Drehen der Gewindespindel 7 mit einem Sechskantwerkzeug mit Drehmomentadapter zu ermöglichen. Beispielhaft ist an der Gewindespindel 7 des in Fig. 1 rechts gezeigten Spannarms 5 eine Mutter 15 angeordnet. Mittels eines jeweiligen Drehgelenks 17 ist der jeweilige Spannschieber 7 gegenüber dem jeweiligen Spannarm 5 verdrehbar gelagert.

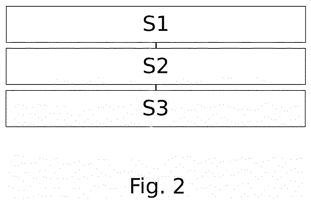

Fig. 2 zeigt ein Verfahren zum Lagern eines Robotermanipulators auf einer Tischplatte mittels einer Roboterhalterung 100, wobei die Roboterhalterung 100 eine Basislagereinheit 1 mit einer Robotermanipulatorschnittstelle 3 aufweist und wobei die Basislagereinheit 1 zum flächigen Einleiten der Gewichtskraft des Robotermanipulators in eine Oberseite der Tischplatte dient, wobei an einem stirnseitigen Ende der Basislagereinheit 1 ein erstes Ende eines Spannarms 5 angeordnet ist und der Spannarm 5 einen von der Basislagereinheit 1 wegführenden Armabschnitt und einen zur Basislagereinheit 1 parallel verlaufenden Armabschnitt aufweist, und wobei an einem zweiten Ende des Spannarms 5 ein gegenüber dem Spannarm 5 in Richtung der Basislagereinheit 1 bewegbarer Spannschieber 7 angeordnet ist und an einem der Basislagereinheit 1 zugewandten Ende des Spannschiebers 7 ein Auflagekissen 9 um zumindest eine Achse momentenfrei am Spannschieber 7 angeordnet ist, wobei der Spannschieber 7 eine Gewindespindel ist und die Gewindespindel durch ein im Spannarm 5 angeordnetes Innengewinde geführt ist, wobei die Gewindespindel an der von dem Auflagekissen 9 weg gewandten Seite eine Werkzeugschnittstelle 11 zum Ansetzen eines Werkzeugs zum Drehen der Gewindespindel aufweist, aufweisend die Schritte:
- Anordnen S1 der Basislagereinheit 1 auf der Oberseite der Tischplatte bei gleichzeitigem Führen des zur Basislagereinheit 1 parallel verlaufenden Armabschnitts unter die Tischplatte,
- Verschieben S2 des Spannschiebers 7 in Richtung der Basislagereinheit 1 zum Andrücken des Auflagekissens 9 gegen eine Unterseite der Tischplatte durch Andrehen des Spannschiebers 7 mittels eines Drehmomentschlüssels bis zu einem vorgegebenen Maximaldrehmoment, und
- Fixieren S3 des Robotermanipulators an der Robotermanipulatorschnittstelle 3 der Basislagereinheit 1.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Basislagereinheit
- 3: Robotermanipulatorschnittstelle
- 5: Spannarm
- 7: Spannschieber
- 9: Auflagekissen
- 11: Werkzeugschnittstelle
- 13: Kugelgelenk
- 15: Mutter
- 17: Drehgelenk
- 100: Roboterhalterung

- S1: Anordnen
- S2: Verschieben
- S3: Fixieren

## Patentansprüche

1. Roboterhalterung (100) zum Fixieren eines Robotermanipulators an einer Tischplatte, aufweisend eine Basislagereinheit (1) mit einer Robotermanipulatorschnittstelle (3) zum Fixieren des Robotermanipulators auf der Basislagereinheit (1), wobei die Basislagereinheit (1) zum flächigen Einleiten einer Gewichtskraft des Robotermanipulators in eine Oberseite der Tischplatte dient, wobei an einem stirnseitigen Ende der Basislagereinheit (1) ein erstes Ende eines Spannarms (5) angeordnet ist und der Spannarm (5) einen von der Basislagereinheit (1) wegführenden Armabschnitt und einen zur Basislagereinheit (1) parallel verlaufenden Armabschnitt aufweist, sodass beim Lagern der Basislagereinheit (1) auf der Tischplatte der parallel zur Basislagereinheit (1) verlaufende Armabschnitt unterhalb der Tischplatte verläuft, und wobei an einem zweiten Ende des Spannarms (5) ein gegenüber dem Spannarm (5) in Richtung der Basislagereinheit (1) bewegbarer Spannschieber (7) angeordnet ist, wobei der Spannschieber (7) gegenüber dem Spannarm (5) verdrehbar gelagert ist, **dadurch gekennzeichnet, dass** der Spannschieber (7) über Rasterpositionen verdrehbar ist, und an einem der Basislagereinheit (1) zugewandtem Ende des Spannschiebers (7) ein Auflagekissen (9) am Spannschieber (7) angeordnet ist, wobei das Auflagekissen (9) um zumindest eine Achse momentenfrei gegenüber dem Spannschieber (7) gelagert ist und wobei das Auflagekissen (9) zum Andrücken der Roboterhalterung (100) gegen eine Unterseite der Tischplatte dient.

2. Roboterhalterung (100) nach Anspruch 1,
wobei an der Basislagereinheit (1) genau zwei Spannarme (5) angeordnet sind.

3. Roboterhalterung (100) nach einem der vorhergehenden Ansprüche,
wobei der Spannschieber (7) eine Gewindespindel ist, wobei die Gewindespindel durch ein im Spannarm (5) angeordnetes Innengewinde geführt ist.

4. Roboterhalterung (100) nach Anspruch 3,
wobei die Gewindespindel (7) an der von dem Auflagekissen (9) weg gewandten Seite eine Werkzeugschnittstelle (11) zum Ansetzen eines Werkzeugs zum Drehen der Gewindespindel aufweist.

5. Roboterhalterung (100) nach Anspruch 4,
wobei die Werkzeugschnittstelle (11) ein Innensechskant-Profil aufweist.

6. Roboterhalterung (100) nach einem der vorhergehenden Ansprüche,
wobei das Auflagekissen (9) und der Spannschieber (7) über ein Kugelgelenk (13) verbunden sind.

7. Verfahren zum Lagern eines Robotermanipulators auf einer Tischplatte mittels einer Roboterhalterung (100), wobei die Roboterhalterung (100) eine Basislagereinheit (1) mit einer Robotermanipulatorschnittstelle (3) aufweist und wobei die Basislagereinheit (1) zum flächigen Einleiten der Gewichtskraft des Robotermanipulators in eine Oberseite der Tischplatte dient, wobei an einem stirnseitigen Ende der Basislagereinheit (1) ein erstes Ende eines Spannarms (5) angeordnet ist und der Spannarm (5) einen von der Basislagereinheit (1) wegführenden Armabschnitt und einen zur Basislagereinheit (1) parallel verlaufenden Armabschnitt aufweist, und wobei an einem zweiten Ende des Spannarms (5) ein gegenüber dem Spannarm (5) in Richtung der Basislagereinheit (1) bewegbarer Spannschieber (7) angeordnet ist, wobei der Spannschieber (7) gegenüber dem Spannarm (5) verdrehbar gelagert ist und der Spannschieber (7) über Rasterpositionen verdrehbar ist, und an einem der Basislagereinheit (1) zugewandten Ende des Spannschiebers (7) ein Auflagekissen (9) um zumindest eine Achse momentenfrei am Spannschieber (7) angeordnet ist, aufweisend die Schritte:
- Anordnen (S1) der Basislagereinheit (1) auf der Oberseite der Tischplatte bei gleichzeitigem Führen des zur Basislagereinheit (1) parallel verlaufenden Armabschnitts unter die Tischplatte,
- Verschieben (S2) des Spannschiebers (7) in Richtung der Basislagereinheit (1) zum Andrücken des Auflagekissens (9) gegen eine Unterseite der Tischplatte, und
- Fixieren (S3) des Robotermanipulators an der Robotermanipulatorschnittstelle (3) der Basislagereinheit (1).

8. Verfahren nach Anspruch 7,
wobei der Spannschieber (7) eine Gewindespindel ist und die Gewindespindel durch ein im Spannarm (5) angeordnetes Innengewinde geführt ist, wobei die Gewindespindel an der von dem Auflagekissen (9) weg gewandten Seite eine Werkzeugschnittstelle (11) zum Ansetzen eines Werkzeugs zum Drehen der Gewindespindel aufweist, und
wobei das Verschieben (S2) des Spannschiebers (7) in Richtung der Basislagereinheit (1) zum Andrücken des Auflagekissens (9) gegen die Unterseite der Tischplatte durch Andrehen des Spannschiebers (7) mittels eines Drehmomentschlüssels bis zu einem vorgegebenen Maximaldrehmoment erfolgt.

## Claims

1. Robot mount (100) for fixing a robot manipulator to a tabletop, comprising
a base bearing unit (1) with a robot manipulator interface (3) for fixing the robot manipulator to the base bearing unit (1), wherein
the base bearing unit (1) serves to distribute the weight force of the robot manipulator over the upper surface of the tabletop,
wherein a first end of the clamping arm (5) is arranged at an end face of the base bearing unit (1) and the clamping arm (5) has an arm section extending away from the base bearing unit (1) and an arm section extending parallel to the base bearing unit (1), so that when the base bearing unit (1) is mounted on the tabletop, the arm section extending parallel to the base bearing unit (1) extends below the tabletop,
and wherein a clamping slide (7) movable relative to the clamping arm (5) in the direction of the base bearing unit (1) is arranged at a second end of the clamping arm (5),
wherein the clamping slide (7) is rotatable relative to the clamping arm (5), **characterized in that** the clamping slide (7) can be rotated via detent positions, and a support cushion (9) is arranged on the clamping slide (7) at an end of the clamping slide facing the base bearing unit (1),
wherein the support cushion (9) is mounted on the clamping slide (7) in a torque-free manner about at least one axis relative to the clamping slide (7), and wherein the support cushion (9) serves to press the robot mount (100) against an underside of the tabletop.

2. Robot mount (100) according to claim 1,
wherein exactly two clamping arms (5) are arranged on the base bearing unit (1).

3. Robot mount (100) according to one of the preceding claims,
wherein the clamping slide (7) is a threaded spindle, wherein the threaded spindle is guided through an internal thread arranged in the clamping arm (5).

4. Robot mount (100) according to claim 3,
wherein the threaded spindle (7) has a tool interface (11) on the side facing away from the support cushion (9) for attaching a tool for turning the threaded spindle.

5. Robot mount (100) according to claim 4,
wherein the tool interface (11) has an internal hexagonal profile.

6. Robot mount (100) according to one of the preceding claims,
wherein the support cushion (9) and the clamping slide (7) are connected via a ball joint (13).

7. Method for mounting a robot manipulator on a tabletop using a robot mount (100),
wherein the robot mount (100) has a base bearing unit (1) with a robot manipulator interface (3) and wherein the base bearing unit (1) serves to distribute the weight force of the robot manipulator over the upper surface of the tabletop,
wherein a first end of a clamping arm (5) is arranged at an end face of the base bearing unit (1), and the clamping arm (5) has an arm section leading away from the base bearing unit (1) and an arm section running parallel to the base bearing unit (1),
and wherein a clamping slide (7) movable relative to the clamping arm (5) in the direction of the base bearing unit (1) is arranged at a second end of the clamping arm (5),
wherein the clamping slide (7) is rotatable relative to the clamping arm (5) via detent positions,
and a support cushion (9) is arranged on one end of the clamping slide (7) facing the base bearing unit (1) around at least one axis without torque on the clamping slide (7),
comprising the steps:
mounting (S1) the base bearing unit (1) on the upper surface of the tabletop while simultaneously guiding the arm section running parallel to the base bearing unit (1) under the tabletop,
displacement (S2) of the clamping slide (7) in the direction of the base bearing unit (1) to press the support cushion (9) against an underside of the tabletop, and
fixing (S3) the robot manipulator to the robot manipulator interface (3) of the base bearing unit (1).

8. Method according to claim 7,
wherein the clamping slide (7) is a threaded spindle and the threaded spindle is guided through an internal thread arranged in the clamping arm (5),
wherein the threaded spindle has a tool interface (11) on the side facing away from the support cushion (9) for attaching a tool for turning the threaded spindle, and
wherein the displacement (S2) of the clamping slide (7) in the direction of the base bearing unit (1) for pressing the support cushion (9) against the underside of the tabletop is effected by turning the clamping slide (7) by means of a torque wrench up to a predetermined maximum torque.

## Revendications

1. Support de robot (100) pour fixer un manipulateur robot sur un plateau de table, comprenant une unité de support de base (1) avec une interface de manipulateur robot (3) pour fixer le manipulateur robot sur l'unité de support de base (1), où l'unité de support de base (1) sert à l'introduction surfacique d'une force de pesanteur du manipulateur robot dans une face supérieure du plateau de table, où à une extrémité frontale de l'unité de support de base (1) une première extrémité du bras de serrage (5) est disposée et le bras de serrage (5) a une section de bras s'éloignant de l'unité de support de base (1) et une section de bras courant parallèlement à l'unité de support de base (1), de sorte que lors d'un positionnement de l'unité de support de base (1) sur le plateau de table, la section de bras courant parallèlement à l'unité de support de base (1) s'étend en dessous du plateau de table, et où à une deuxième extrémité du bras de serrage (5) un coulisseau de serrage (7) déplaçable par rapport au bras de serrage (5) en direction de l'unité de support de base (1) est disposé, où le coulisseau de serrage (7) est monté de manière pivotant par rapport au bras de serrage (5), **caractérisé en ce que**
le coulisseau de serrage (7) est pivotant via des positions de détente, et à une extrémité du coulisseau de serrage (7) orientée vers l'unité de support de base (1) un coussin d'appui (9) est disposé sur le coulisseau de serrage (7), où le coussin d'appui (9) est monté sans couple par rapport au coulisseau de serrage (7) autour d'au moins un axe et où le coussin d'appui (9) sert à presser le support de robot (100) contre une face inférieure du plateau de table.

2. Support de robot (100) selon la revendication 1,
où à l'unité de support de base (1) exactement deux bras de serrage (5) sont disposés.

3. Support de robot (100) selon l'une des revendications précédentes,
où le coulisseau de serrage (7) est une broche filetée, où la broche filetée est guidée par un filetage interne disposé dans le bras de serrage (5).

4. Support de robot (100) selon la revendication 3,
où la broche filetée (7) a, du côté opposé au coussin d'appui (9), une interface d'outil (11) pour appliquer un outil pour faire tourner la broche filetée.

5. Support de robot (100) selon la revendication 4,
où l'interface d'outil (11) présente un profil hexagonal intérieur.

6. Support de robot (100) selon l'une des revendications précédentes,
où le coussin d'appui (9) et le coulisseau de serrage (7) sont reliés par une articulation à rotule (13),

7. Méthode pour monter un manipulateur robot sur un plateau de table au moyen d'un support de robot (100), où le support de robot (100) comprend une unité de support de base (1) avec une interface de manipulateur robot (3) et où l'unité de support de base (1) sert à l'introduction surfacique de la force de pesanteur du manipulateur robot dans une face supérieure du plateau de table, où à une extrémité frontale de l'unité de support de base (1) une première extrémité d'un bras de serrage (5) est disposée et le bras de serrage (5) a une section de bras s'éloignant de l'unité de support de base (1) et une section de bras courant parallèlement à l'unité de support de base (1), et où à une deuxième extrémité du bras de serrage (5) un coulisseau de serrage (7) déplaçable par rapport au bras de serrage (5) en direction de l'unité de support de base (1) est disposé, où le coulisseau de serrage (7) est pivotant via des positions de détente, et à une extrémité du coulisseau de serrage (7) orientée vers l'unité de support de base (1) un coussin d'appui (9) est disposé sans couple autour d'au moins un axe sur le coulisseau de serrage (7), comprenant les étapes :
- disposer (S1) l'unité de support de base (1) sur la face supérieure du plateau de table en guidant simultanément la section de bras courant parallèlement à l'unité de support de base (1) sous le plateau de table,
- déplacer (S2) le coulisseau de serrage (7) en direction de l'unité de support de base (1) pour presser le coussin d'appui (9) contre une face inférieure du plateau de table, et
- fixer (S3) le manipulateur robot à l'interface de manipulateur robot (3) de l'unité de support de base (1).

8. Méthode selon la revendication 7,
où le coulisseau de serrage (7) est une broche filetée et la broche filetée est guidée par un filetage interne disposé dans le bras de serrage (5), où la broche filetée a, du côté opposé au coussin d'appui (9), une interface d'outil (11) pour appliquer un outil pour faire tourner la broche filetée, et
où le déplacement (S2) du coulisseau de serrage (7) en direction de l'unité de support de base (1) pour presser le coussin d'appui (9) contre la face inférieure du plateau de table s'effectue par vissage du coulisseau de serrage (7) au moyen d'une clé dynamométrique jusqu'à un couple maximal prédéfini.
